# EUROPÄISCHE PATENTSCHRIFT

(11) **EP 1 700 778 B1**
(45) Veröffentlichungstag und Bekanntmachung des Hinweises auf die Patenterteilung: **09.05.2007**
(21) Anmeldenummer: 06004293.4
(22) Anmeldetag: 03.03.2006
(51) Int. Cl.: B62D 51/00, B66F 9/20, B62B 3/06

(54) **Deichselgeführtes Flurförderzeug**
Towing bar guided industrial truck
Chariot de manutention guidé à timon

(30) Priorität: 08.03.2005 DE 102005010641
(43) Veröffentlichungstag der Anmeldung: 13.09.2006
(73) Patentinhaber: STILL S.A.R.L., 77107 Meaux Cedex (FR)
(72) Erfinder: Alegre, Jean-Pierre, 60150 Thourotte (FR); Brouart, Francois, 60200 Compiegne (FR); Ferreira, Paulo, 60870 Rieux (FR)
(74) Vertreter: Kasseckert, Rainer

(56) Entgegenhaltungen:
- DE-A1- 2 751 333
- DE-A1- 10 116 037
- US-A1- 2005 045 409

## Beschreibung

Die Erfindung betrifft ein deichselgeführtes Flurförderzeug mit einer um eine vertikale Achse schwenkbaren längenvariablen Deichsel. Die Länge der Deichsel eines deichselgeführten Flurförderzeugs wird von verschiedenen Anforderungen bestimmt. Einerseits soll die Deichsel möglichst lang sein, um beim Lenken durch einen langen Hebelarm niedrige Lenkkräfte zu ermöglichen und durch einen großen Abstand der Bedienperson vom Flurförderzeug die Sicherheit zu verbessern. Andererseits soll die Deichsel möglichst kurz sein, um den für Rangiermanöver benötigten Raum zu verringern. Um diese Anforderungen zu erfüllen, sind Deichseln zumeist um eine horizontale Schwenkachse beweglich ausgeführt, um durch Aufstellen der Deichsel in eine annähernd senkrechte Lage den Platzbedarf zu verringem und gleichzeitig bei weniger beengten Platzverhältnissen durch eine annähend wagerechte Stellung der Deichsel einen langen Hebelarm zu bieten. Dabei ist die Länge der Deichsel dadurch begrenzt, dass bei aufgestellter Deichsel die Bedienbarkeit auch für kleine ' Bedienpersonen noch möglich sein muss. Um den nutzbaren Hebelarm bei annähernd waagerechter Deichsel zu vergrößern, ist es aus der gattungsbildenden DE 27 51 333 bekannt, eine längenvariable Deichsel vorzusehen, die in annähernd senkrechter Stellung eine geringere Länge aufweist als in annähernd waagerechter Stellung. Da die Länge der Deichsel jedoch von dem Schwenkwinkel um die horizontale Achse abhängt, hat die Bedienperson ein ungenaues Steuergefühl und muss beim Rangieren auf engem Raum eine ungünstige erhöhte Stellung der Deichsel wählen. Zudem besteht bei dieser Bauweise die Gefahr, dass die Bedienperson beim Rangieren mit seitlich ausgeschwenkter Deichsel zu nahe am Fahrzeug steht und so ein Fuß der Bedienperson unter dem Fahrzeug eingeklemmt werden kann. Dies ist insbesondere dann der Fall, wenn die vertikale Schwenkachse von der vorderen Kante des Fahrzeugs eine geringere Entfemung besitzt als zu einer seitlichen Kante, wie zumeist bei derartigen Flurförderzeugen üblich. In diesem Fall ist der Bedienperson nämlich häufig die Größere Nähe zum Flurförderzeug bei seitlich ausgeschwenkter Deichsel nicht bewusst.

Der Erfindung liegt daher die Aufgabe zugrunde, ein deichselgeführtes Flurförderzeug mit einer um eine vertikale Achse schwenkbaren längenvariablen Deichsel zu schaffen, das verbesserte Sicherheit und einfache Handhabung der Deichsel ermöglicht.

Diese Aufgabe wird erfindungsgemäß dadurch gelöst, dass mindestens eine Vorrichtung zur Veränderung der Länge L_{d} der Deichsel in Abhängigkeit vom Schwenkwinkel α der Deichsel um die vertikale Achse vorgesehen ist. Der Schwenkwinkel α der Deichsel ist von der Position der Bedienperson abhängig, die wiederum mit der ausgeübten Tätigkeit (Fahren oder Rangieren) zusammenhängt. Indem die Länge der Deichsel vom Schwenkwinkel α um die vertikale Achse abhängt, kann so bei unterschiedlichen Positionen der Bedienperson die jeweils für Sicherheit und Bedienbarkeit in der jeweiligen Position optimale Länge der Deichsel erzielt werden.

Es ist vorteilhaft, wenn die Deichsel bei einer Ausrichtung annähernd parallel zu der durch die Fahrzeuglängsachse und die Fahrzeughochachse aufgespannten Ebene eine geringere Länge L_{d} aufweist als bei einer wesentlich davon abweichenden Ausrichtung, insbesondere bei einer Ausrichtung annähernd parallel zu einer durch die Fahrzeugquerachse und die Fahrzeughochachse aufgespannten Ebene. Dadurch wird die Gefahr des Einklemmens von Füßen der Bedienperson beim Rangieren, wenn die Bedienperson seitlich des Fahrzeugs steht, reduziert.

Weiterhin ist es vorteilhaft, wenn die Vorrichtung zur Veränderung der Länge L_{d} der Deichsel derart ausgeführt ist, dass die Länge L_{d} der Deichsel proportional zur Auslenkung der Deichsel aus der von Fahrzeuglängsachse und Fahrzeughochachse aufgespannten Ebene verändert, insbesondere vergrößert wird. Es wird eine allmähliche Veränderung der Deichsellänge L_{d} mit dem Schwenkwinkel vorgenommen, die für die Bedienperson klar erkennbar ist und nicht als störend empfunden wird.

In einer weitere vorteilhaften Ausgestaltung der Erfindung ist die Vorrichtung zur Veränderung der Länge L_{d} der Deichsel derart ausgeführt, dass bei konstantem Anstellwinkel der Deichsel die Länge L_{d} der Deichsel in Abhängigkeit vom Schwenkwinkel α der Deichsel um die vertikale Achse derart verändert wird, dass der Abstand zwischen der vertikalen Projektion der Außenkontur des Antriebsteils und des Deichselkopfs annähernd konstant ist. Dadurch wird die Verlängerung der Deichsel in Abhängigkeit von der Kontur des Antriebsteils vorgenommen. Bei einer Lenkbewegung, bei der der Anstellwinkel der Deichsel, d.h. der Winkel zwischen der Längsachse des Deichselschafts und der Aufstandsfläche, nicht verändert wird, ist sichergestellt, dass die Bedienperson, die den Deichselkopf führt, immer den annähernd gleichen Abstand vom Antriebsteil hält. Dies ist insbesondere bei einer komplexen Geometrie des Antriebsteils von Vorteil, beispielsweise bei einer Anordnung der vertikalen Schwenkachse außerhalb der Fahrzeuglängsachse, da ansonsten die Bedienperson je nach Position einen sehr unterschiedlichen Abstand vom Antriebsteil einnimmt.

In einer vorteilhaften Ausgestaltung der Erfindung umfasst die Vorrichtung zur Veränderung der Länge L_{d} der Deichsel mindestens einen Gewindetrieb. Ein Gewindetrieb stellt eine einfache Verstellmöglichkeit dar, die sich bei Abschaltung des Antriebsmotors relativ einfach fixieren lässt. Die Deichsel erscheint der Bedienperson damit genauso starr, wie sie es von herkömmlichen Geräten gewohnt ist.

In einer weiteren vorteilhaften Ausgestaltung der Erfindung umfasst die Vorrichtung zur Veränderung der Länge der Deichsel L_{d} mindestens einen Riementrieb. Ein Riementrieb ist einfach und kostengünstig herstellbar und kann je nach Beschaffenheit des Riemens Federungsfunktionen übernehmen, so dass bei einer Kollision des Deichselkopfs mit einem Hindernis eine gewisse Nachgiebigkeit gegeben ist.

Eine weitere vorteilhafte Ausgestaltung der Erfindung besteht darin, dass die Vorrichtung zur Veränderung der Länge L_{d} der Deichsel mindestens einen Zahnstangentrieb umfasst. Ein Zahnstangentrieb ist einfach aufgebaut und robust.

In einer zweckmäßigen Ausgestaltung der Erfindung ist die Vorrichtung zur Veränderung der Länge L_{d} der Deichsel mittels einer mechanischen Zwangskopplung durch die Verschwenkung der Deichsel um die vertikale Drehachse betätigbar ist.

Es ist zweckmäßig, wenn die Differenz zwischen maximaler Länge und minimaler Länge L_{d} der Deichsel zwischen 50 mm und 500 mm, vorzugsweise annähernd 100 mm beträgt. Deichsellängenänderungen in diesem Bereich sind einerseits ausreichend groß, um die geschilderten positiven Wirkungen zu ermöglichen und andererseits klein genug, um die Rangiereigenschaften des Fahrzeugs nicht wesentlich zu verschlechtern.

Vorteilhafterweise ist die Verlängerung der Deichsel in Abhängigkeit von der Fahrtrichtung des Flurförderzeugs vornehmbar. So kann beispielsweise eine Verlängerung der Deichsel nur bei einer Rückwärtsbewegung des Flurförderzeugs vornehmbar sein, da bei dieser Bewegungsrichtung die Gefahr für die Bedienperson am größten ist.

Weitere Vorteile und Einzelheiten der Erfindung werden im Folgenden anhand des in der Zeichnung dargestellten Ausführungsbeispiels näher erläutert. Gleiche Teile sind mit gleichen Bezugszeichen gekennzeichnet. Dabei zeigt
- Figur 1: einen Niederhubwagen mit drei verschiedenen Stellungen der Deichsel als Beispiel eines erfindungsgemäßen Flurförderzeugs
- Figur 2: die Deichsel eines erfindungsgemäßen Flurförderzeugs in einer Schnittbilddarstellung in Seitenansicht,
- Figur 3: schematisch die Abhängigkeit der Deichsellänge L_{d} vom Schwenkwinkel α der Deichsel eines erfindungsgemäßen Flurförderzeugs.

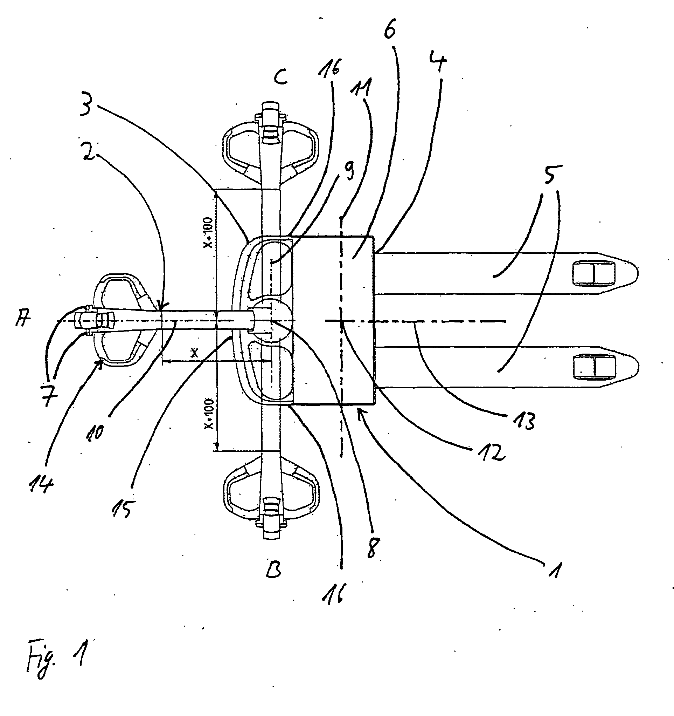

Figur 1 zeigt einen Niederhubwagen 1 mit drei verschiedenen Stellungen der Deichsel 2 als Beispiel eines erfindungsgemäßen Flurförderzeugs. Das Flurförderzeug besteht aus einem Antriebsteil 3 und einem Lastteil 4, der ein gabelförmiges Lastaufnahmemittel 5 aufweist. Vor dem Lastaufnahmemittel 5 ist ein Batteriefach 6 mit einer hier nicht dargestellten Batterie angeordnet. Vor dem Batteriefach 6 wiederum ist im Antriebsteil 3 eine hier nicht dargestellte Antriebseinheit angeordnet, die im Wesentlichen aus einem Elektromotor, einem Getriebe und einem Antriebsrad besteht. Die Bedienperson führt das Flurförderzeug 1 mittels der Deichsel 2, indem sie über Bedienelemente 7 Geschwindigkeit und Fahrtrichtung vorgibt, während das Antriebsrad durch ein Verschwenken der Deichsel 2 um eine vertikale Achse 8 gelenkt wird. Weiterhin ist die Deichsel 8 um eine horizontale Schwenkachse 9 drehbar gelagert, so dass diese von einer annähernd waagerechten Stellung in eine annähernd senkrechte Stellung angehoben werden kann.

Der Schwenkwinkel α der Deichsel 2 um die Schwenkachse 8 ist derjenige Winkel, der zwischen einer durch die Deichsellängsachse 10 und die vertikale Schwenkachse 8 aufgespannten Ebene und der durch die Fahrzeugquerachse 11 und die Fahrzeughochachse 12 aufgespannten Ebene gebildet wird. Die Deichsel ist in drei Stellungen dargestellt. In Position A ist die durch die Deichsellängsachse 10 und die vertikale Schwenkachse 8 aufgespannte Ebene parallel zu der durch die Fahrzeuglängsachse und die Fahrzeughochachse aufgespannten Ebene ausgerichtet (Schwenkwinkel α = 0°). In dieser Stellung weist die Deichsel ihre kürzeste Länge L_{d} = X auf, während sich bei einer seitlichen Ausschwenkung der Deichsel 2 hin zu den Positionen B (α = -90°) oder C (α = +90°), die Länge L_{d} der Deichsel um 100 mm vergrößert. Damit ist der Abstand zwischen dem Deichselkopf 14 und der vorderen Kante 15 des Flurförderzeugs 1 in Stellung A der Deichsel 2 genauso groß wie zwischen dem Deichselkopf 14 und der seitlichen Kante 16 des Flurförderzeugs 1 bei den Stellungen B und C. Demzufolge ist auch der Abstand der Bedienperson vom Flurförderzeug 1 in den Positionen A, B und C identisch und diese muss nicht, wenn sie neben dem Flurförderzeug 1 steht, erhöhte Sorgfalt aufwenden, um eine Berührung mit dem Fahrzeug 1 zu vermeiden.

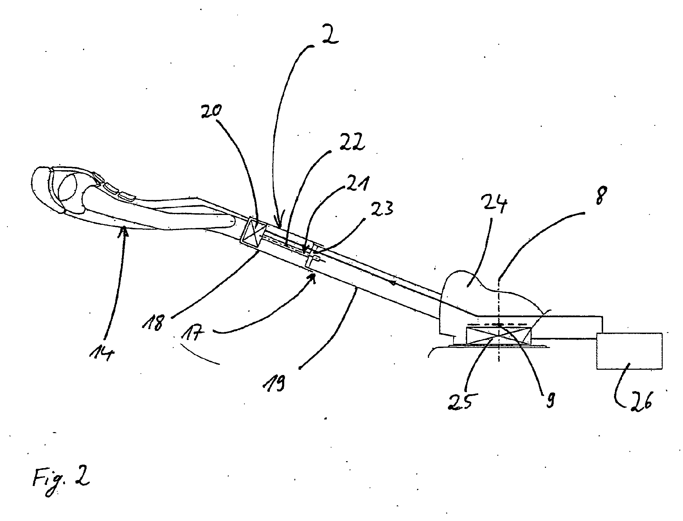

Figur 2 zeigt schematisch eine Vorrichtung 21 zur Veränderung der Länge der Deichsel 2. Der Deichselschaft 17 ist zweiteilig ausgeführt, wobei ein äußerer Teil 18 auf einem inneren Teil 19 derart geführt ist, dass eine Längenverstellung der Deichsel '2 ermöglicht wird. Nahe des Deichselkopfes 14 ist ein Elektromotor 20 angeordnet der einen Gewindetrieb 21 antreibt. Der Gewindetrieb 21 besteht im Wesentlichen aus einer Spindel 22, die mit dem Motor 20 und damit mit dem oberen Teil 18 des Deichselschafts 17 verbunden ist und einer Mutter 23, die mit dem unteren Teil 19 des Deichselschafts 17 verbunden ist. Im Deichselfuß 24 ist ein Sensor 25 zur Erfassung des Drehwinkels α der Deichsel 2 angeordnet, der mit einer elektrischen Steuerung 26 in Wirkverbindung steht. Die elektrische Steuerung 26 steuert in Abhängigkeit vom Drehwinkel α den Elektromotor 20 derart ans, dass die dem Drehwinkel α zugeordnete Länge L_{d} der Deichsel 2 eingestellt wird.

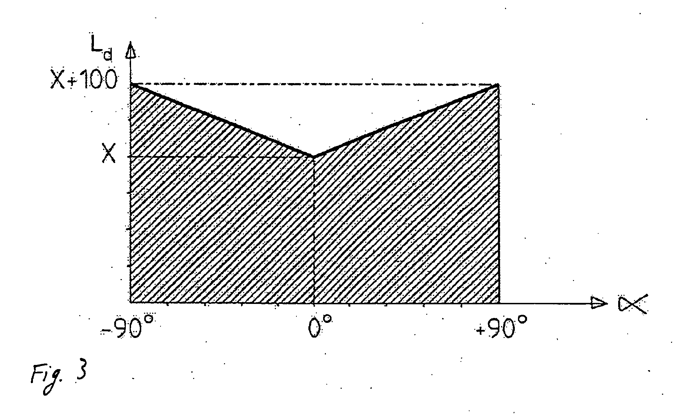

Figur 3 zeigt den Zusammenhang zwischen der Länge L_{d} der Deichsel und dem Schwenkwinkel α. Im gezeigten Ausführungsbeispiel ist ein linearer Zusammenhang gegeben und, wobei zudem nach beiden Seiten hin für gleiche Schwenkwinkel α gleiche Längenänderungen vorgesehen sind. Die maximale Längenänderung beträgt im gezeigten Ausführungsbeispiel 100 mm.

Selbstverständlich sind auch andere Ausführungsformen denkbar. So kann beispielsweise bei einem Flurförderzeug1 , bei dem die vertikale Schwenkachse 8 der Deichsel 2 außerhalb der Fahrzeugmittelachse 13 angeordnet ist, die Längenänderung der Deichsel 2 abhängig von der Seite, zu der die Deichsel 2 hinverschwenkt wird, unterschiedlich sein, also beispielsweise bei einer Verschwenkung zu der Seite des Fahrzeugs, auf der die Schwenkachse 8 angeordnet ist, geringer als bei einer Verschwenkung zur davon abgewandten Seite. Auch kann die Verlängerung der Deichsel 2 von der Fahrtrichtung des Flurförderzeugs 1 abhängig sein, um beispielsweise bei einer Bewegung des Fahrzeugs 1 zur Bedienperson hin einen größeren Sicherheitsabstand zu schaffen als bei einer (ungefährlicheren) Bewegung von der Bedienperson weg.

Anstelle des Gewindetriebs 21 sind auch andere Anordnungen denkbar, beispielsweise mittels eines Zahnstangentriebs oder eines Riementriebs. Weiterhin sind auch Ausführungen denkbar, bei denen anstelle einer motorischen Verstellung der Deichsel 2 eine über eine mechanische Zwangskopplung durch die Verschwenkung der Deichsel 2 um die vertikale Drehachse 8 betätigte Vorrichtung zur Längenverstellung vorgesehen ist. Ebenso sind hydraulisch oder pneumatisch angetriebene Verstellvorrichtungen denkbar.

## Patentansprüche

1. Deichselgeführtes Flurförderzeug (1) mit einer um eine vertikale Achse (8) schwenkbaren längenvariablen Deichsel (2), **dadurch gekennzeichnet, dass** mindestens eine Vorrichtung (21) zur Veränderung der Länge (L_{d}) der Deichsel (2) in Abhängigkeit vom Schwenkwinkel (α) der Deichsel (2) um die vertikale Achse (8) vorgesehen ist.

2. Deichselgeführtes Flurförderzeug (1) nach Anspruch 1, **dadurch gekennzeichnet, dass** die Deichsel (2) bei einer Ausrichtung annähernd parallel zu der durch die Fahrzeuglängsachse (13) und die Fahrzeughochachse (12) aufgespannten Ebene eine geringere Länge (L_{d}) aufweist als bei einer wesentlich davon abweichenden Ausrichtung, insbesondere bei einer Ausrichtung annähernd parallel zu einer durch die Fahrzeugquerachse (11) und die Fahrzeughochachse (12) aufgespannten Ebene.

3. Deichselgeführtes Flurförderzeug (1) nach Anspruch 1 oder 2, **dadurch gekennzeichnet, dass** die Vorrichtung (21) zur Veränderung der Länge (L_{d}) der Deichsel (2) derart ausgeführt ist, dass die Länge (L_{d}) der Deichsel (2) proportional zur Auslenkung der Deichsel (2) aus der von Fahrzeuglängsachse (13) und Fahrzeughochachse (12) aufgespannten Ebene verändert, insbesondere vergrößert wird.

4. Deichselgeführtes Flurförderzeug (1) nach Anspruch 1 oder 2, **dadurch gekennzeichnet, dass** die Vorrichtung (21) zur Veränderung der Länge (L_{d}) der Deichsel (2) derart ausgeführt ist, dass bei konstantem Anstellwinkel der Deichsel (2) die Länge (L_{d}) der Deichsel (2) in Abhängigkeit vom Schwenkwinkel (α) der Deichsel (2) um die vertikale Achse (8) derart verändert wird, dass der Abstand zwischen der vertikalen Projektion der Außenkontur des Antriebsteils (14) und des Deichselkopfs (3) annähernd konstant ist.

5. Deichselgeführtes Flurförderzeug (1) nach einem der Ansprüche 1 bis 4, **dadurch gekennzeichnet, dass** die Vorrichtung (21) zur Veränderung der Länge (L_{d}) der Deichsel (2) mindestens einen Gewindetrieb (21) umfasst.

6. Deichselgeführtes Flurförderzeug (1) nach einem der Ansprüche 1 bis 4, **dadurch gekennzeichnet, dass** die Vorrichtung (21) zur Veränderung der Länge (L_{d}) der Deichsel (2) mindestens einen Riementrieb umfasst.

7. Deichselgeführtes Flurförderzeug (1) nach einem der Ansprüche 1 bis 4, **dadurch gekennzeichnet, dass** die Vorrichtung (21) zur Veränderung der Länge (L_{d}) der Deichsel (2) mindestens einen Zahnstangentrieb umfasst.

8. Deichselgeführtes Flurförderzeug nach einem der Ansprüche 1 bis 7, **dadurch gekennzeichnet, dass** die Vorrichtung (21) zur Veränderung der Länge (L_{d}) der Deichsel (2) mittels einer mechanischen Zwangskopplung durch die Verschwenkung der Deichsel (2) um die vertikale Drehachse (8) betätigbar ist.

9. Deichselgeführtes Flurförderzeug (1) nach einem der Ansprüche 1 bis 8, **dadurch gekennzeichnet, dass** die Differenz zwischen maximaler Länge und minimaler Länge der Deichsel (2) zwischen 50 mm und 500 mm, vorzugsweise annähernd 100 mm beträgt.

10. Deichselgeführtes Flurförderzeug (1) nach einem der Ansprüche 1 bis 9, **dadurch gekennzeichnet, dass** die Verlängerung der Deichsel (2) in Abhängigkeit von der Fahrtrichtung des Flurförderzeugs (1) vornehmbar ist.

## Claims

1. Tiller-steered industrial truck (1) having a tiller (2) which is variable in length and can be pivoted about a vertical axis (8), **characterized in that** at least one apparatus (21) for changing the length (L_{d}) of the tiller (2) as a function of the pivoting angle (α) of the tiller (2) about the vertical axis (8) is provided.

2. Tiller-steered industrial truck (1) according to Claim 1, **characterized in that** the tiller (2) has a shorter length (L_{d}) in the case of an alignment approximately parallel to the plane covered by the vehicle longitudinal axis (13) and the vehicle vertical axis (12) than in the case of an alignment which substantially deviates therefrom, in particular in the case of an alignment approximately parallel to a plane covered by the vehicle transverse axis (11) and the vehicle vertical axis (12).

3. Tiller-steered industrial truck (1) according to Claim 1 or 2, **characterized in that** the apparatus (21) for changing the length (L_{d}) of the tiller (2) is designed such that the length (L_{d}) of the tiller (2) changes, in particular is increased, proportionally with respect to the deflection of the tiller (2) from the plane covered by the vehicle longitudinal axis (13) and the vehicle vertical axis (12).

4. Tiller-steered industrial truck (1) according to Claim 1 or 2, **characterized in that** the apparatus (21) for changing the length (L_{d}) of the tiller (2) is designed such that, given a constant setting angle of the tiller (2), the length (L_{d}) of the tiller (2) is changed as a function of the pivoting angle (α) of the tiller (2) about the vertical axis (8) such that the distance between the vertical projection of the outer contour of the drive part (14) and the tiller head (3) is approximately constant.

5. Tiller-steered industrial truck (1) according to one of Claims 1 to 4, **characterized in that** the apparatus (21) for changing the length (L_{d}) of the tiller (2) comprises at least one threaded drive (21).

6. Tiller-steered industrial truck (1) according to one of Claims 1 to 4, **characterized in that** the apparatus (21) for changing the length (L_{d}) of the tiller (2) comprises at least one belt drive.

7. Tiller-steered industrial truck (1) according to one of Claims 1 to 4, **characterized in that** the apparatus (21) for changing the length (L_{d}) of the tiller (2) comprises at least one rack-and-pinion drive.

8. Tiller-steered industrial truck according to one of Claims 1 to 7, **characterized in that** the apparatus (21) for changing the length (L_{d}) of the tiller (2) can be actuated by means of a positive mechanical coupling owing to the pivoting of the tiller (2) about the vertical axis of rotation (8).

9. Tiller-steered industrial truck (1) according to one of Claims 1 to 8, **characterized in that** the difference between the maximum length and the minimum length of the tiller (2) is between 50 mm and 500 mm, preferably approximately 100 mm.

10. Tiller-steered industrial truck (1) according to one of Claims 1 to 9, **characterized in that** it is possible for the extension of the tiller (2) to be carried out as a function of the direction of travel of the industrial truck (1).

## Revendications

1. Chariot de manutention (1) guidé par timon, comprenant un timon (2) de longueur variable pouvant pivoter autour d'un axe vertical (8), **caractérisé en ce qu'**il est prévu au moins un dispositif (21) pour faire varier la longueur (L_{d}) du timon (2) en fonction de l'angle de pivotement (α) du timon (2) autour de l'axe vertical (8).

2. Chariot de manutention (1) guidé par timon selon la revendication 1, **caractérisé en ce que** le timon (2), dans une orientation approximativement parallèle au plan tendu par l'axe longitudinal du véhicule (13) et l'axe vertical du véhicule (12), présente une longueur (L_{d}) plus petite que dans une orientation s'en écartant considérablement, notamment dans une orientation approximativement parallèle à un plan tendu par l'axe transversal du véhicule (11) et l'axe vertical du véhicule (12).

3. Chariot de manutention (1) guidé par timon selon la revendication 1 ou 2, **caractérisé en ce que** le dispositif (21) pour faire varier la longueur (L_{d}) du timon (2) est réalisé de telle sorte que la longueur (L_{d}) du timon (2) varie proportionnellement à la déviation du timon (2) par rapport au plan tendu par l'axe longitudinal du véhicule (13) et l'axe vertical du véhicule (12), notamment augmente.

4. Chariot de manutention (1) guidé par timon selon la revendication 1 ou 2, **caractérisé en ce que** le dispositif (21) pour faire varier la longueur (L_{d}) du timon (2) est réalisé de telle sorte que pour un angle d'inclinaison constant du timon (2), la longueur (L_{d}) du timon (2) varie en fonction de l'angle de pivotement (α) du timon (2) autour de l'axe vertical (8), de telle sorte que la distance entre la projection verticale du contour extérieur de la partie d'entraînement (14) et de la tête de timon (3) reste approximativement constante.

5. Chariot de manutention (1) guidé par timon selon l'une quelconque des revendications 1 à 4, **caractérisé en ce que** le dispositif (21) pour faire varier la longueur (L_{d}) du timon (2) comprend au moins un entraînement à vis (21).

6. Chariot de manutention (1) guidé par timon selon l'une quelconque des revendications 1 à 4, **caractérisé en ce que** le dispositif (21) pour faire varier la longueur (L_{d}) du timon (2) comprend au moins un entraînement à courroie.

7. Chariot de manutention (1) guidé par timon selon l'une quelconque des revendications 1 à 4, **caractérisé en ce que** le dispositif (21) pour faire varier la longueur (L_{d}) du timon (2) comprend au moins un entraînement à crémaillère.

8. Chariot de manutention guidé par timon selon l'une quelconque des revendications 1 à 7, **caractérisé en ce que** le dispositif (21) pour faire varier la longueur (L_{d}) du timon (2) peut être actionné au moyen d'un accouplement forcé mécanique par pivotement du timon (2) autour de l'axe de rotation vertical (8).

9. Chariot de manutention (1) guidé par timon selon l'une quelconque des revendications 1 à 8, **caractérisé en ce que** la différence entre la longueur maximale et la longueur minimale du timon (2) est comprise entre 50 mm et 500 mm, de préférence vaut approximativement 100 mm.

10. Chariot de manutention (1) guidé par timon selon l'une quelconque des revendications 1 à 9, **caractérisé en ce que** la prolongation du timon (2) peut être effectuée en fonction de la direction de conduite du chariot de manutention (1).
